# FASCICULE DE BREVET EUROPEEN

(11) **EP 1 910 459 B1**
(45) Date de publication et mention de la délivrance du brevet: **27.08.2014**
(21) Numéro de dépôt: 06778778.8
(22) Date de dépôt: 05.07.2006
(51) Int. Cl.: C08K 5/5357, C07F 9/6571

(54) **PRODUIT IGNIFUGE PHOSPHONATE ET PROCEDE**
FEUERFESTES PHOSPHONATPRODUKT UND VERFAHREN
FIREPROOF PHOSPHONATE PRODUCT AND A METHOD

(30) Priorité: 05.07.2005 US 695882 P
(43) Date de publication de la demande: 16.04.2008
(73) Titulaire: Rhodia UK Limited, Watford, Hertfordshire WD24 4QP (GB)
(72) Inventeur: SCHANEN, Vincent, F-69006 Lyon (FR); SHAMBLEE, Dwight, North Charleston, South Carolina 29420 (US); PRIIMOV, Gleb, Coventry, West Midlands CV4 9HW (GB); SALTER, Julie Ann, Dudley, West Midlands DY1 2EG (GB)
(74) Mandataire: Cordier, Pascal Christian
(86) Numéro de dépôt international: PCT/FR2006/001598
(87) Numéro de publication internationale: WO 2007/006915

(56) Documents cités:
- EP-A1- 0 758 654
- WO-A2-2005/012420

## Description

La présente invention concerne un produit comprenant un mélange de trois types de phosphonates linéaires, ramifiés ou cycliques, un procédé pour la synthèse de ce nouveau produit, et l'utilisation d'un tel produit en tant qu'agent ingifugeant, notamment pour des résines thermoplastiques, ou additifs fonctionnels dans des matrices de polymère.

### Description de l'art antérieur

Des agents ignifugeants sont incorporés dans de nombreux produits à des fins de sécurité afin de contrôler la propagation du feu. Les agent ignifugeants peuvent, par exemple, agir en causant l'extinction rapide des flammes, ou en rendant le produit difficile à enflammer. Bien que des agent ignifugeants aient été conventionnellement utilisés pour traiter des textiles, des tissus d'ameublement, etc. et aient été incorporés dans des mousses, des peintures et des résines telles que des résines époxy, de nombreuses autres applications sont activement recherchées actuellement, en particulier dans les industriels électronique, automobile, aérospatiale et de construction.

Il est connu d'utiliser des phosphonates en tant qu'ignifuges. Par exemple, les brevets US3789091, EP0758654 et WO200502412 décrivent un procédé de synthèse de produits phosphonates cycliques. En raison de l'utilisation et de la demande croissantes d'agents ignifugeants, il existe un besoin de proposer un procédé plus économique de synthèse industrielle de ces agents à base de phosphonate. De plus, afin de satisfaire les divers besoins des nombreuses applications différentes dans lesquelles ces agents sont conventionnellement utilisés et/ou commencent à être utilisés, il existe un besoin de fournir une plus large gamme de composés phosphonates que celle qui a été disponible à ce jour. Par exemple, des agents ignifugeants sous différentes formes physiques et de différentes viscosités peuvent être nécessaires, suivant les applications. Bien qu'ils soient utiles pour conférer des propriétés d'iignifugation dans des thermoplastiques, les additifs ignifugeants à base de phosphonate présentent des inconvénients qui limitent leur utilisation. De plus, des produits ignifugeants ayant des stabilités thermique et hydrolytique améliorées sont très souhaitables pour différentes applications.

Il a été observé qu'un grand nombre des additifs ignifugeants conventionnels ont tendance à migrer et/ou se volatiliser depuis les matrices thermoplastiques, au cours du temps. La migration de l'additif ignifugeant conduit l'objet à perdre finalement ses propriétés d'ignifugation. Certains ignifugeants peuvent produire ou contenir des composants volatils qui, au contact avec le verre, en particulier le verre froid, causent un voilage. Cela est particulièrement Indésirable lorsque l'ignifuge doit être utilisé dans des applications automobiles ou aérospatiales.

Un autre inconvénient des additifs ignifugeants à base de phosphonate connus sont leurs propriétés hygroscopiques, qui conduisent les objets thermoplastiques incorporant ces additifs à absorber de l'humidité ou de l'eau au cours du temps. De plus, les additifs ignifugeants à base de phosphonate connus ont une faible stabilité thermique. Il est connu que les additifs se décomposent à différentes températures de traitement des thermoplastiques, et en particulier durant le processus d'extrusion des thermoplastiques.

De plus, l'utilisation de phosphates contenant des halogènes en tant qu'ignifugeants est considérée comme indésirable du point de vue environnemental.

Il existe ainsi un besoin de mettre au point des agents ignifugeants permetant d'éviter tout les inconvénients considérés.

La présente invention propose un procédé pour la préparation d'un additif ignifugeant à base de phosphonate qui évite les inconvénients des additifs ignifuges à base de phosphonate connus pour produire des compostions utiles.

Plus précisément, l'invention a pour objet un procédé tel que défini dans la revendication 1.

L'invention donne accès à un produit sans halogène comprenant un mélange des trois types de composants phosphonates (A), (B) et (C) comme définis : 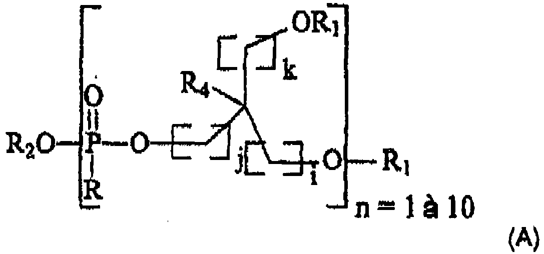 dans lesquels:
- i, j, k sont indépendamment égaux à 1 à 10,
- R est un groupe alkyle ou alcényle linéaire, ramifié ou cyclique,
- R₄ est un proton ou un groupe alkyle ou alcényle linéaire, ramifié ou cyclique,
- R₂ est un groupe alkyle ou alcényle linéaire, ramifié ou cyclique ou le phosphonate cyclique (I) : 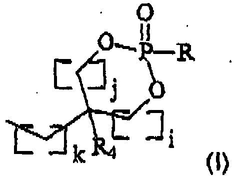
dans lequel i, j, k, R et R₄ sont comme décrits ci-dessus,
- R₁ est 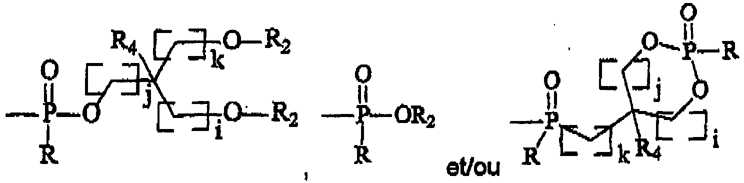
dans lesquels R₂, R₄, R, i, j et k sont comme décrits ci-dessus ; 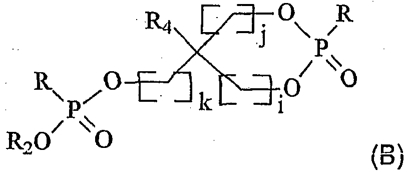 dans lequel R₂, R₄, R, i, j et k sont comme décrits ci-dessus ; 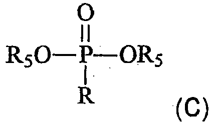 dans lequel :
- R est un groupe alkyle ou alcényle linéaire, ramifié ou cyclique comme décrit ci-dessus,
- R₅ est un groupe alkyle ou alcényle linéaire, ramifié ou cyclique.

Le produit est de préférence défini comme étant un mélange de (A), (B) et (C) dans les rapports molaires suivants :

| **Composant** | **% minimum** | **% maximum** | **% type** |
|---|---|---|---|
| (A) | 1 | 99 | 50 |
| (B) | 1 | 99 | 40 |
| (C) | 0 | 25 | 10 |

De préférence, les rapports molaires entre (A), (B) et (C) sont :

| **Composant** | **%** |
|---|---|
| (A) | 30-55 |
| (B) | 30-40 |
| (C) | 5-15 |

L'un des rapports (A)/(B)/(C) préférés est :
(A) = 50 %,
(B) = 40 %, et
(C) = 10%.

L'un des produits préférés est :
i, J, k = 1
R₄ = éthyle
R = hexyle
R₅ = butyle
R₂ = butyle ou (I)

Un autre produit préféré est :
i, J, k = 1
R₄ = éthyle
R = butyle
R₅ = butyle
R₂ = butyle ou (I)

L'invention propose en outre un procédé pour la synthèse du mélange défini de (A), (B) et (C) comprenant les étapes suivantes :
a) réaction d'un triol de formule générale (IV) avec un dialkylphosphite de formule générale (V) pour produire l'intermédiaire (VI) : 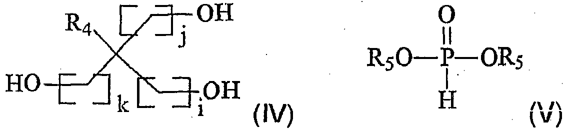
b) réaction de l'intermédiaire (VI) avec un alcène ou alcyne linéaire, ramifié ou cyclique ou un alcène ou alcyne substitué qui a au moins une liaison insaturée, en présence d'un initiateur de radical non oxydant pour convertir partiellement le phosphite en phosphonate,
c) élimination de phosphite bicyclique produit à l'étape précédente, par distillation, notamment en présence d'un solvant,
d) réaction de l'intermédiaire avec un alcène ou alcyne linéaire, ramifié ou cyclique ou un alcène ou alcyne substitué qui a au moins une liaison insaturée, en présence d'un initiateur de radical, pour obtenir une conversion complète de l'intermédiaire,
e) conduite facultative de la purification du produit obtenu dans l'étape d), par exemple par distillation.

L'intermédiaire (VI) correspond à un mélange de composants (A'), (B') et (C').

La première réaction chimique de l'étape a) est une transestérification entre un dialkylphosphite et un triol, de préférence catalysée par une base, par exemple, un alcoolate de métal tel qu'un alcoolate de sodium ou de potassium ; ou une base organique non nucléophile quelconque telle que le 1,8-diazabicyclo[5.4.0]undéc-7-ène: DBU.

Le rapport molaire du triol au dialkylphosphite est typiquement dans la plage de 1 : 1,5 à 1 : 10, de préférence de 1 : 1,6 à 1 : 2,5, de manière préférée entre toutes de 1 : 1,7 à 1 : 1,9.

Le rapport molaire de la base au dialkylphosphite est typiquement dans la plage de 0,01 : 1 à 0,5: 1, de préférence de 0,02: 1 à 0,1 : 1, de manière préférée entre toutes de 0,03 : 1 à 0,05 : 1.

Dans le mode de réalisation préféré entre tous, la première réaction est conduite avec le TMOP en tant que triol, et le DBHP en tant que dialkylphosphite :

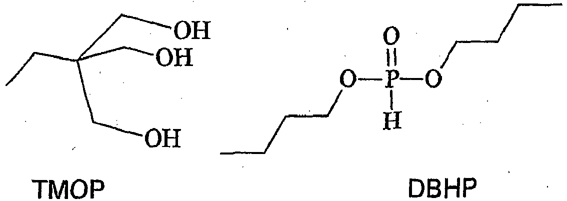

Pour obtenir une bonne conversion, de préférence le mélange de réaction doit être chauffé, et l'alcool généré durant la transestérification doit être éliminé durant la réaction. Cette opération peut être conduite en utilisant un procédé de distillation conventionnel quelconque ; la conduite de la réaction sous pression réduite est un procédé approprié pour éliminer l'alcool. Cette étape est effectuée à une température dans la plage de 5 à 200°C, de préférence entre 20 et 150°C, de manière préférée entre toutes entre 40 et 130°C.

Cette étape est effectuée sous pression réduite entre 1 et 900 mbars, de préférence entre 5 et 500 mbars, de manière préférée entre toutes entre 10 et 30 mbars.

Durant la réaction, tout le dialkylphosphite peut être chargé en une fois ou en continu en plusieurs heures. Si l'ajout est continu, l'efficacité volumique est significativement améliorée. La base est ajoutée par fractions durant le processus. L'utilisation d'un solvant est possible.

Dans le mode de réalisation préféré entre tous, la première réaction est conduite sous une pression de 10 à 20 mbars, tandis que la température est lentement augmentée de 40-50°C à 110-125°C. La solution de méthoxyde de sodium dans le méthanol est de préférence utilisée en tant que base. Le butanol formé est distillé en continu.

La description précédente indique que durant la réaction du dialkylphosphite avec un polyol, le mélange de réaction évolue vers le composant de type (B') lorsque la réaction est conduite de manière à être complète. Nous avons désormais découvert que même après un temps de réaction long des tentatives pour obtenir le produit thermodynamique de type (B'), les composants de type (A') et (C') sont encore présents en quantités significatives, dépassant parfois 25 % du poids de produit. 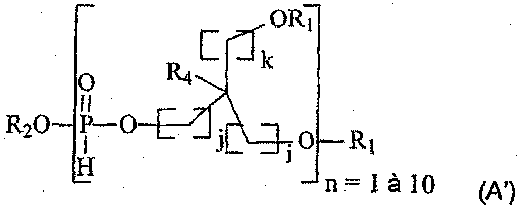 (I) étant 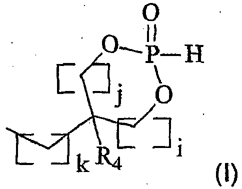 R₁ étant : 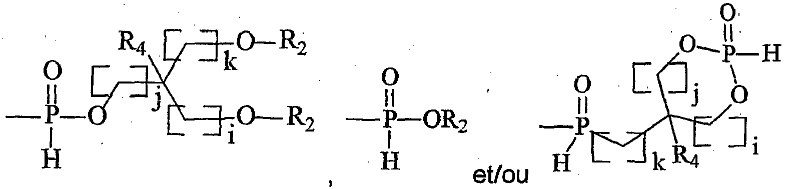 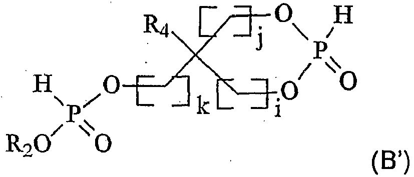 et

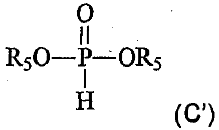

Durant cette étape une réaction secondaire forme des phosphites bicycliques de formule générale (II)

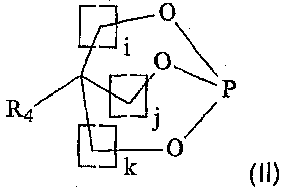

Certains phosphites bicycliques (II) sont connus comme étant toxiques.

Dans le cas où le triol utilisé pour conduire la réaction est le TMOP, l'impureté (II) générée est également appelée le A13.

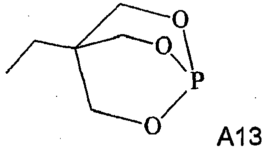

Il n'est pas possible d'éliminer le phosphite bicyclique à ce stade par une distillation en raison de la faible stabilité thermique des intermédiaires (A'), (B') et (C') et en raison du point d'ébullition élevé du phosphite bicyclique (p.é. A13 = 110°C à 8 mmHg). De plus, plus le mélange de réaction est chauffé, plus la quantité d'impureté bicyclique générée est importante.

L'autre manière classique d'éliminer le phosphite bicyclique est la réaction de celui-ci avec un hydrocarbure halogéné, par exemple, le bromobutane (réaction d'Arbusov). Cette technique est adaptée mais non idéale, étant donné qu'elle conduit à un produit halogéné. Le produit halogéné n'est pas souhaitable du point de vue environnemental, en particulier depuis que des nouvelles réglementations interdisent certains ignifuges halogénés.

La deuxième étape b) de la réaction consiste en une alkylation radicalaire des liaisons P-H des intermédiaires (A'), (B') et (C') par des alcènes ou des alcynes.

Ce type de réactions d'addition radicalaire est connu, ces réactions étant provoquées par des initiateurs de radicaux tels que des peroxydes, par exemple, le di-tert-butylperoxyde, ou des initiateurs azoïques.

Cependant, l'utilisation d'initiateurs de peroxyde conduit à la formation de taux élevés de phosphate bicyclique (III) :

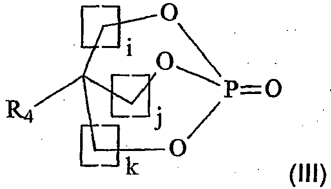

Certains phosphates bicycliques (III) sont connus comme étant toxiques. Si le triol utilisé pour conduire la réaction est le TMOP, l'impureté toxique (III) générée est également appelée l'oxyde A13.

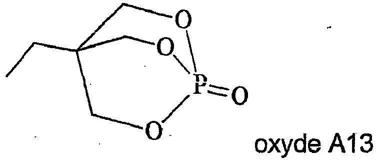

En raison de son point d'ébullition élevé, le phosphate bicyclique ne peut pas être éliminé par distillation. La manière classique d'éliminer ce produit secondaire est par lavage avec de l'eau ou des bases aqueuses telles que l'hydroxyde ou le carbonate de sodium. L'étape de lavage présente deux principaux inconvénients; elle génère une grande quantité de déchets, et le produit final contient inévitablement de l'eau résiduelle qui peut affecter de manière indésirable sa stabilité thermique.

Afin d'éviter la formation de phosphates bicycliques, il est possible d'utiliser un initiateur non oxydant, tel que par exemple AIBN ou VAZO 67, 2,2'-azobis(2-méthylbutyronitrile). Malheureusement, ces types d'initiateurs ne sont pas aussi efficaces que les peroxydes, et même en utilisant une grande quantité d'initiateur il n'est pas possible d'obtenir une conversion complète de la liaison P-H en liaison P-C.

Nous avons découvert désormais que les problèmes des impuretés de phosphite / phosphate bicyclique peuvent être résolus en utilisant un premier initiateur non oxydant pour obtenir une certaine conversion (au moins 10 % de P-H converti en P-C), cela donne au produit une stabilité thermique suffisante pour permettre l'élimination du phosphite bicyclique par distillation. Ensuite, la réaction est prolongée et une conversion totale peut être obtenue avec un initiateur plus efficace tel que le di-ter-butylperoxyde. De manière inattendue, il n'y a pas de phosphite bicyclique supplémentaire généré durant cette étape finale. Le produit préparé de cette manière a un très faible taux de phosphite bicyclique (II) et de phosphate bicyclique (III), typiquement moins de 0,1 % m/m, ce qui rend l'étape de lavage superflue.

Pour la deuxième réaction chimique de l'étape b), le rapport molaire du dialkylphosphite (utilisé dans l'étape a)) à l'alcène ou alcyne est typiquement dans la plage de 1 : 10 à 1 : 100, de préférence de 1 : 5 à 1 : 10, de manière préférée entre toutes de 1 : 1 à 1 : 1,5.

Le rapport molaire du dialkylphosphite (utilisé dans l'étape a)) à l'initiateur non oxydant est typiquement dans la plage de 1 : 1 à 1 : 0,5, de préférence de 1 : 0,5 à 1 : 0,1, de manière préférée entre toutes de 1 : 0,1 à 1 : 0,03.

Cette étape est généralement conduite à une température dans la plage de 40 à 200°C, de préférence entre 60 et 150°C, de manière préférée entre toutes entre 80 et 130°C.

Cette étape est généralement conduite sous une pression dans la plage de 1 à 50 bars, de préférence entre 1 et 10 bars, de manière préférée entre toutes entre 1 et 5 bars.

L'alcène ou alkyle et l'initiateur non oxydant peut être ajouté en continu durant la réaction.

L'initiateur non oxydant peut être dissous dans un solvant ou dans le réactif alcène lorsqu'il est liquide. L'utilisation d'un solvant est possible, tel que, par exemple, le toluène ou le cyclohexane.

Le phosphite bicyclique est généralement éliminé par distillation / revaporisation, dans l'étape c). Cette étape peut être conduite en présence d'un solvant, de préférence un solvant non nucléophile, tel que le toluène, le cyclohexane, ou le dichlorométhane.

Cette étape est généralement conduite à une température dans la plage de 80 à 200°C, de préférence entre 100 et 150°C, de manière préférée entre toutes entre 120 et 145°C.

Cette étape est généralement conduite sous pression réduite dans la plage de 1 à 900 mbars, de préférence entre 5 et 500 mbars, de manière préférée entre toutes entre 0,5 et 5 mbars.

Pour la troisième réaction chimique de l'étape d), le rapport molaire du dialkylphosphite (utilisé dans l'étape a)) à l'alcène ou alcyne est typiquement dans la plage de 1 : 10 à 1 : 100, de préférence de 1 : 5 à 1 : 10, de manière préférée entre toutes de 1 : 0,1 à 1 : 0,5.

Le rapport molaire du dialkylphosphite (utilisé dans l'étape a)) à l'initiateur peroxyde est typiquement dans la plage de 1 : 1 à 1 : 0,5, de préférence de 1 : 0,5 à 1 : 0,1, de manière préférée entre toutes de 1 : 0,1 à 1 : 0,03.

Cette étape est généralement conduite à une température dans la plage de 40 à 200°C, de préférence entre 60 et 150°C, de manière préférée entre toutes entre 110 et 130°C.

Cette étape est généralement conduite sous une pression dans la plage de 1 à 50 bars, de préférence entre 1 et 10 bars, de manière préférée entre toutes entre 1 et 5 bars.

L'alcène ou alcyne et l'initiateur peroxyde peuvent être ajoutés en continu durant la réaction.

L'initiateur peroxyde peut être dissous dans un solvant ou dans un alcène/alcyne lorsque il est liquide.

L'utilisation d'un solvant est possible, tel que par exemple le toluène ou le cyclohexane.

Dans le mode de réalisation préféré entre tous, la deuxième réaction de l'étape b) est conduite sous une pression de 1,5 bar, avec une température augmentant lentement de 110°C à 125°C. VAZO 67 est utilisé en tant qu'initiateur non oxydant. Le 1-hexène est utilisé en tant qu'alcène.

L'étape de revaporisation est conduite sous 1 mbar et de 140 à 145°C.

Dans le mode de réalisation préféré entre tous, la troisième réaction de l'étape d) est conduite sous une pression de 1,5 bar, avec une température augmentant lentement de 125°C à 135°C. Le di-tert-butylperoxyde est utilisé en tant qu'initiateur. Le 1-hexène est utilisé en tant qu'alcène. Une revaporisation finale est effectuée à 150-170°C à 5 mbars.

L'invention concerne également l'utilisation d'un produit phosphonate tel que décrit précédemment en tant que, ou en rapport avec, un agent ignifugeant. En effet, le produit de l'invention apporte des propriétés d'ignifugation aux matières plastiques, en particulier aux thermoplastiques. Des exemples représentatifs mais non limitants comprennent acrylonitrile-butadiène-styrène, le polystyrène, le polyamide, le polyéthylène, le polypropylène, le polycarbonate, le PVC, le polyéthylène-téréphtalate, le polybutylène-téréphtalate et d'autres.

Le produit phosphonate peut également être utilisé comme agents ingifugeants pour dans, ou en rapport avec, des résines époxy, des résines et composites de polyuréthane, des résines phénoliques, des peintures, des vernis et des textiles.

De plus, pour l'utilisation en tant qu'agent ignifugeant, le produit phosphonate selon la présente invention peut être absorbé sur un oxyde, hydroxyde ou sel minéral à porosité élevée. Les composés inorganiques qui peuvent être utilisés comprennent des oxydes ou hydroxydes de silicium, d'aluminium, de magnésium, d'étain, de fer, de zirconium et de titane, et des silicates tels que le talc et le mica. Le produit obtenu de cette manière peut être utilisé en tant qu'additif ignifuge pour des thermoplastiques. Des exemples représentatifs mais non limitants de thermoplastiques qui peuvent être rendus ignifugés de cette manière comprennent acrylonitrile-butadiène-styrène, le polystyrène, le polyamide, le polyéthylène, le polypropylène, le polycarbonate, le PVC, le polyéthylène-téréphtalate, le polybutylène-téréphtalate et d'autres.

Les matières ignifugés de la présente invention peuvent être utilisés dans des applications conventionnelles quelconques, par exemple dans les industries automobile, aérospatiale et de construction.

Le produit phosphonate selon la présente invention peut être utilisé pour le revêtement de matériaux inorganiques particulaires, pour améliorer la dispersibilité de tels matériaux dans des résines thermoplastiques. Un tel revêtement peut augmenter grandement la compatibilité et donc la dispersibilité de tels matériaux inorganiques particulaires dans de telles résines, qui est souvent insuffisante en raison de la nature hydrophile des pigments ou charges inorganiques et de la nature hydrophobe des résines thermoplastiques. Les matériaux de revêtement obtenus de cette manière peuvent être utilisés en tant qu'additifs fonctionnels pour améliorer les propriétés d'une matrice de polymère, par exemple en tant qu'absorbeurs de lumière UV, colorants, opacifiants et similaire dans différents thermoplastiques.

Des exemples représentatifs mais non limitants de matériaux inorganiques particulaires qui peuvent être traités comprennent des matériaux qui sont utilisés en tant que pigments, charges et extendeurs. Des exemples comprennent le dioxyde de titane, l'oxyde de zinc, des pigments à base d'antimoine, des pigments à base de baryum, des pigments à base de calcium, des pigments à base de zirconium, des pigments à base de chrome, des pigments à base de fer, des pigments à base de plomb, le sulfure de zinc, le lithopone, la silice, des silicates tels que le talc et le mica, des oxydes et hydroxydes d'aluminium, des oxydes et hydroxydes de magnésium, des sulfates tels que le gypse et le sulfate de baryum, des carbonates tels que le carbonate de calcium, des borates tels que le borate de zinc ou des argiles.

### PARTIE EXPERIMENTALE

### Exemple 1 : Préparation d'un mélange A'/B'/C' (Réaction de transestérification)

Le matériel utilisé est une cuve à double enveloppe de 1 litre, avec une unité de circulation et un chauffage associés. La cuve est équipée d'un thermocouple et d'un bras latéral conduisant à un condenseur et un collecteur pour collecter le distillat de butanol. Les réactifs sont agités en utilisant un agitateur en PTFE à 4 pals. Le système est étanche à l'air avec une ligne d'azote à 3 voies pour remplir à nouveau la cuve après qu'elle ait été à pression réduite.

### Composition :

| **Réactif** | **Poids** | **Moles** | **Rapport molaire** |
|---|---|---|---|
| TMOP | 670 | 5 | 1 |
| DBHP (1) | 850 | 4,38 | 0,875 |
| NaOMe 25 % (1) | 30 | 0,139 | 0,028 |
| DBHP (2) | 847,6 | 4,37 | 0,875 (DBHP total : 1,75) |
| NaOMe 25 % (2) | 36 | 0,167 | 0,033 (NaOMe total : 0,06) |

### Procédé :

On charge le TMOP et le DBHP (1). On chauffe à 60°C pour dissoudre TMOP. On ajoute alors le NaOMe 25 % (1) et on refroidit à 30°C. On applique ensuite un vide complet et on augmente lentement la température de cuve. Le butanol commence à se distiller à approximativement 40°C. On élimine le butanol total en approximativement 10 heures.

Le DBHP (2) est ajouté en continu en 6 heures. Le NaOMe 25 % est également divisé en 3 parties égales et est ajouté après qu'environ 20 % du butanol ait été éliminé, après qu'environ 40 % du butanol ait été éliminé, et après qu'environ 60 % du butanol ait été éliminé.

La température reste d'environ 60°C jusqu'à ce que l'ajout de DBHP soit arrêté, puis une température plus élevée est requise pour distiller le butanol résiduel. (distillation continue à la vitesse d'environ 100 g/h pendant 3/4 heures supplémentaires en augmentant progressivement la température lorsque la distillation ralentit).

La température de cuve maximale n'est pas supérieure à 125°C.

Produit moyen : 1,3 kg de produit est obtenu.

Le produit est ensuite analysé par RMN ³¹P (insertion de D₂O).

Plusieurs essais ont été conduits dans ces conditions.

| **Numéro d'essai** | **TMOP (rapport)** | **DBHP (rapport)** | **NaOMe (25 %) (rapport)** | **A13** | **B'** | **C'** | **A'** |
|---|---|---|---|---|---|---|---|
| 639js371 | 1 | 1,75 | 0,055 | 0,2 | 40,7 | 8,3 | 50,8 |
| 639js372 | 1 | 1,75 | 0,055 | 0,2 | 39,1 | 9,3 | 51,3 |
| 672js380 | 1 | 1,75 | 0,055 | 0,2 | 37,6 | 9,2 | 53,1 |
| 672js382 | 1 | 1,75 | 0,055 | 0,2. | 40,5 | 10,5 | 48,8 |

### Exemple 2: Préparation d'un mélange A/B/C et A'/B'/C' (réaction d'alkylation)

125 kg d'intermédiaire A'B'C' préparés selon l'exemple 1 sont chargés sous vide dans un réacteur de 50 gallons. Les réacteurs sont ensuite rendus à nouveau inertes en appliquant un vide et en repressurisant avec de l'azote 3 fois. Le mélange est chauffé à 105-110°C.

Avec une purge de N₂ de 200 l/h la pression augmente à 1,5 bar. Une solution à 50 % en poids de Vazo-67 dans le toluène est préparée au laboratoire et divisée en portions de 244 g. Chaque portion est ajoutée en 30 minutes avec une charge d'hexène simultanée en 9 h 50 min. Après l'exothermie initiale qui amène la température de cuve à 115°C, la température est maintenue dans la plage de 106 à 113°C. Cela donne une conversion de P de 67,1 % en produit.

Cela est suivi de l'ajout de 13,5 portions de 418 g de solution de Vazo-67 à 50 % en poids dans le toluène en 7 heures, sans charge supplémentaire d'hexène. Chaque portion est ajoutée en 30 minutes. La température est maintenue à environ 110°C pendant les premières 3,5 heures puis progressivement augmentée à 127-130°C. Dans la totalité des 13,5 portions de 418 g est ajoutée une portion supplémentaire de 200 g d'initiateur ajoutée entre les portions 12 et 13. Le réacteur est laissé à refroidir. A ce stade la conversion de produit est de 85 à 88 % de P-H en P-C.

La première partie de l'alkylation prend 21,25 heures pour être complètement effectuée.

### Distillation

Le mélange obtenu avec la réaction d'alkylation est distillé afin d'éliminer le A13 pour obtenir une quantité inférieure à 0,1 % en poids.

Conditions: le mélange est chauffé à 160-180°C avec une pression de 1 à 3 mbars. La distillation est arrêtée lorsque environ 10 % de la masse est distillée.

| | **Matériau de départ** | **Après ébullition** | **Distillat** |
|---|---|---|---|
| **Composants** | | | |
| A13 | 0,455 | 0,05 | 16,1 |
| A+B+C | 84,4 | 86,2 | 83,9 |
| A'+B'+C' | 15,1 | 14 | |

| | |
|---|---|
| Poids de matériau de départ | 205 |
| Poids de produit correct après ébullition | 177,3 |
| Poids de distillat | 22,6 |
| perte de poids/condenseur (estimée) | 5 |

### Seconde réaction d'alkylation :

Un réacteur de 50 gallons est chargé avec 150 à 160 kg de produit ABAA'B'C' préparé selon l'étape précédente.

Les aliquotes de ^{t}BuO₂ (267 g) sont ajoutées à des intervalles d'une heure en 20 à 30 min pour les premières 4 h de cette partie de l'alkylation. La charge d'hexène est chargée entre 1,3 et 2,4 kg/h (total : 12,8 kg). La température de réaction est dans la plage de 129 à 133°C en 9 h. La conversion de A'B'C' est supérieure à 98 % en A B C.

### Distillation finale

Un vide d'environ 50 mbars est appliqué au réacteur, une distillation initiale est observée mais lorsque le mélange de réaction est chauffé de 79 à 124°C en 1,5 h aucune distillation supplémentaire n'est observée.

Un meilleur vide (3 à 5 mbars) est appliqué au niveau du réacteur. La température de cuve est progressivement augmentée à 175-180°C en 5 h. Le taux de A13 est de 0,12 % P par analyse RMN ³¹P. La cuve est ensuite chauffée à 180°C/5 mmHg en 3 h.

La composition de l'échantillon final est :
A13 < 0,1 % en poids
oxyde A13 < 0,1 % en poids
ABC > 99%

## Revendications

1. Procédé de préparation d'un mélange de composants (A), (B) et (C) de formule générale : 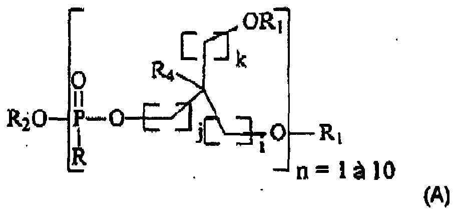 dans lesquels
- i, j, k sont Indépendamment égaux à 1 à 10,
- R est un groupe alkyle ou alcényle linéaire, ramifié ou cyclique,
- R₄ est un proton ou un groupe alkyle ou alcényle linéaire, ramifié ou cyclique,
- R₂ est un groupe alkyle ou alcényle linéaire, ramifié ou cyclique ou le phosphonate cyclique (I) : 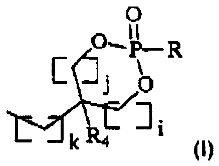
dans lequel i, j, k, R et R₄ sont comme décrits ci-dessus,
- R₁ est 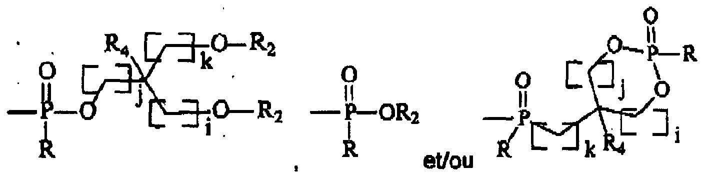
dans lesquels R₂, R₄, R, i, j et k sont comme décrits ci-dessus ; 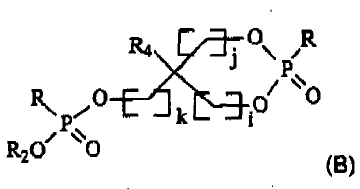 dans lequel R₂, R₄, R, i, j et k sont comme décrits ci-dessus ; 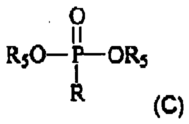 dans lequel :
- R est un groupe alkyle ou alcényle linéaire, ramifié ou cyclique comme décrit ci-dessus,
- R₅ est un groupe alkyle ou alcényle linéaire, ramifié ou cyclique, **caractérisé en ce que** ledit procédé comprend les étapes suivantes :
a) réaction d'un triol de formule générale (IV) avec un dialkylphosphite de formule générale (V) pour produire l'intermédiaire (VI) ; 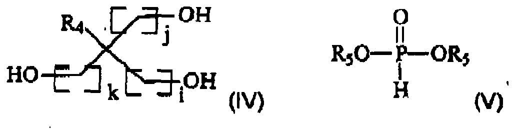
b) réaction de l'intermédiaire (VI) avec un alcène ou alcyne linéaire, ramifié ou cyclique ou un alcène ou alcyne substitué qui a au moins une liaison insaturée, en présence d'un initiateur de radical non oxydant pour convertir partiellement le phosphite en phosphonate ;
c) élimination de phosphite bicyclique produit à l'étape précédente, par distillation, notamment en présence d'un solvant ;
d) réaction de l'intermédiaire avec un alcène ou alcyne linéaire, ramifié ou cyclique ou un alcène ou alcyne substitué qui a au moins une liaison insaturée, en présence d'un initiateur de radical, pour obtenir une conversion totale de l'intermédiaire ; et
e) conduite facultative de la purification du produit obtenu dans l'étape d), par exemple par distillation.

2. Procédé selon la revendication 1 dans lequel R₄ est un proton.

3. Procédé selon la revendication 1 ou 2, dans lequel les rapports entre (A), (B) et (C) sont :
| **Composant** | **%** |
|---|---|
| (A) | 30-55 |
| (B) | 30-40 |
| (C) | 5-15 |

4. Procédé selon la revendication 1 dans lequel :
i, j, k = 1
R₄ = éthyle
R = hexyle
R₅ = butyle
R₂ = butyle ou (I).

5. Procédé selon la revendication 1 dans lequel :
i, j, k = 1
R₄ = éthyle
R = butyte
R₅ = butyle
R₂ = butyle ou (I).

6. Procédé selon la revendication 3, dans lequel :
i, j, k = 1
R₄ = éthyle
R = hexyle
R₅ = butyle
R₂ = butyle ou (I)
et les rapports molaires entre (A), (B) et (C) sont :
| **Composant** | **%** |
|---|---|
| (A) | 30-55 |
| (B) | 30-40 |
| (C) | 5-15 |

7. Procédé selon la revendication 3 dans lequel :
i, j, k = 1
R₄ = éthyle
R = butyle
R₅ = butyle
R₂ = butyle ou (I)
et les rapports molaires entre (A), (B) et (C) sont :
| **Composant** | **%** |
|---|---|
| (A) | 30-55 |
| (B) | 30-40 |
| (C) | 5-15 |

8. Procédé selon la revendication 1, dans lequel l'initiateur de radical non oxydant utilisé dans l'étape b) est le VAZO 87.

9. procédé selon la revendication 1, dans lequel l'initiateur utilisé dans l'étape d) est le di-tert-butylperoxyde.

10. Procédé selon la revendication 1, dans lequel le triol utilisé dans l'étape a) est le TMOP.

11. Utilisation d'un produit phosphonate préparé selon le procédé tel que défini à l'une quelconque des revendications 1 à 10 en tant qu'agent ignifugeant.

12. Utilisation d'un produit phosphonate préparé selon le procédé tel que défini à l'une quelconque des revendications 1 à 11, absorbé sur un oxyde, hydroxyde ou sel minéral à porosité élevée en tant qu'agent ignifugeant.

13. Utilisation selon les revendications 12 ou 13 dans des thermoplastiques.

14. Utilisation selon les revendications 11 ou 12 dans des résines époxy, des résines de polyuréthane, des résines phénoliques, des peintures, des vernis ou des textiles.

## Patentansprüche

1. Verfahren zur Herstellung einer Mischung von Komponenten (A), (B) und (C) der allgemeinen Formel: 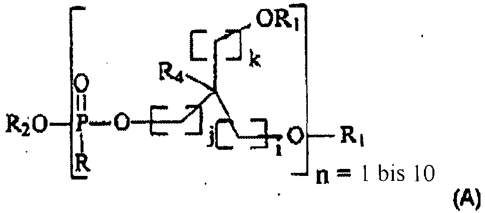 worin:
- i, j und k unabhängig gleich 1 bis 10 sind,
- R für eine lineare, verzweigte oder cyclische Alkyl- oder Alkenylgruppe steht,
- R₄ für ein Proton oder eine lineare, verzweigte oder cyclische Alkyl- oder Alkenylgruppe steht,
- R₂ für eine lineare, verzweigte oder cyclische Alkyl- oder Alkenylgruppe oder das cyclische Phosphonat (I): 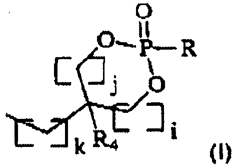 worin i, j, k, R und R₄ wie oben beschrieben sind, steht,
- R₁ für 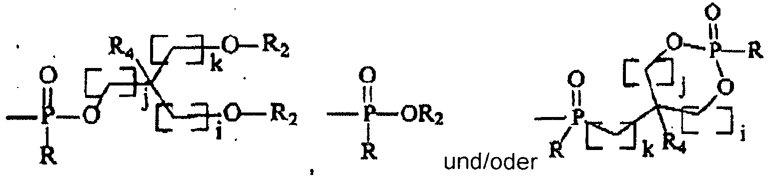 worin R₂, R₄, R, i, j und k wie oben beschrieben sind, 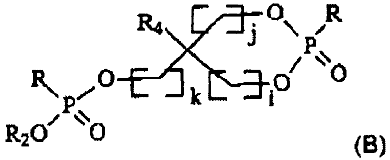 worin R₂, R₄, R, i, j und k wie oben beschrieben sind, 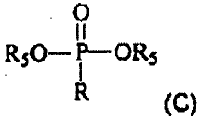 worin:
- R für eine lineare, verzweigte oder cyclische Alkyl- oder Alkenylgruppe gemäß obiger Beschreibung steht,
- R₅ für eine lineare, verzweigte oder cyclische Alkyl- oder Alkenylgruppe steht,
steht;
**dadurch gekennzeichnet, dass** das Verfahren die folgenden Schritte umfasst:
a) Umsetzung eines Triols der allgemeinen Formel (IV) mit einem Dialkylphosphit der allgemeinen Formel (V) zu dem Zwischenprodukt (VI); 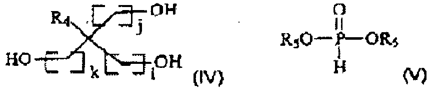
b) Umsetzung des Zwischenprodukts (VI) mit einem linearen, verzweigten oder cyclischen Alken oder Alkin oder einem substituierten Alken oder Alkin mit mindestens einer ungesättigten Bindung in Gegenwart eines nichtoxidierenden Radikalinitiators zur teilweisen Umwandlung des Phosphits in Phosphonat;
c) Entfernung von im vorhergehenden Schritt angefallenem bicyclischen Phosphit durch Destillation, insbesondere in Gegenwart eines Lösungsmittels;
d) Umsetzung des Zwischenprodukts mit einem linearen, verzweigten oder cyclischen Alken oder Alkin oder einem substituierten Alken oder Alkin mit mindestens einer ungesättigten Bindung in Gegenwart eines Radikalinitiators zur vollständigen Umwandlung des Zwischenprodukts; und
e) gegebenenfalls Durchführung der Reinigung des in Schritt d) erhaltenen Produkts, beispielsweise durch Destillation.

2. Verfahren nach Anspruch 1, bei dem R₄ für ein Proton steht.

3. Verfahren nach Anspruch 1 oder 2, bei dem die Verhältnisse zwischen (A), (B) und (C) wie folgt sind:
| Komponente | % |
|---|---|
| (A) | 30-55 |
| (B) | 30-40 |
| (C) | 5-15 |

4. Verfahren nach Anspruch 1, bei dem:
i, j, k = 1
R₄ = Ethyl
R = Hexyl
R₅ = Butyl
R₂ = Butyl oder (I).

5. Verfahren nach Anspruch 1, bei dem:
i, j, k = 1
R₄ = Ethyl
R = Butyl
R₅ = Butyl
R₂ = Butyl oder (I).

6. Verfahren nach Anspruch 3, bei dem:
i, j, k = 1
R₄ = Ethyl
R = Hexyl
R₅ = Butyl
R₂ = Butyl oder (I)
und die Molverhältnisse zwischen (A), (B) und (C) wie folgt sind:
| Komponente | % |
|---|---|
| (A) | 30-55 |
| (B) | 30-40 |
| (C) | 5-15 |

7. Verfahren nach Anspruch 3, bei dem:
i, j, k = 1
R₄ = Ethyl
R = Butyl
R₅ = Butyl
R₂ = Butyl öder (I)
und die Molverhältnisse zwischen (A), (B) und (C) wie folgt sind:
| Komponente | % |
|---|---|
| (A) | 30-55 |
| (B) | 30-40 |
| (C) | 5-15 |

8. Verfahren nach Anspruch 1, bei dem es sich bei dem in Schritt b) verwendeten nichtoxidierenden Radikalinitiator um VAZO67 handelt.

9. Verfahren nach Anspruch 1, bei dem es sich bei dem in Schritt d) verwendeten Initiator um Di-tert-butylperoxid handelt.

10. Verfahren nach Anspruch 1, bei dem es sich bei dem in Schritt a) verwendeten Triol um TMOP handelt.

11. Verwendung eines nach dem Verfahren gemäß einem der Ansprüche 1 bis 10 hergestellten Phosphonatprodukts als Flammschutzmittel.

12. Verwendung eines nach dem Verfahren gemäß einem der Ansprüche 1 bis 11 hergestellten Phosphonatprodukts, absorbiert auf einem hochporösen Mineraloxid, -hydroxid oder -salz als Flammschutzmittel.

13. Verwendung nach den Ansprüchen 12 oder 13 in Thermoplasten.

14. Verwendung nach den Ansprüchen 11 oder 12 in Epoxidharzen, Polyurethanharzen, Phenolharzen, Anstrichmitteln, Lacken oder Textilien.

## Claims

1. Process for preparing a mixture of components (A), (B) and (C) of general formula: 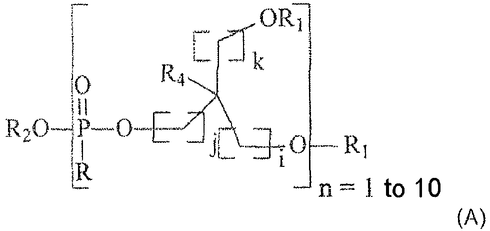 in which:
- i, j and k are, independently, equal to 1 to 10,
- R is a linear, branched or cyclic alkyl or alkenyl group,
- R₄ is a proton or a linear, branched or cyclic alkyl or alkenyl group,
- R₂ is a linear, branched or cyclic alkyl or alkenyl group or the cyclic phosphonate (I): 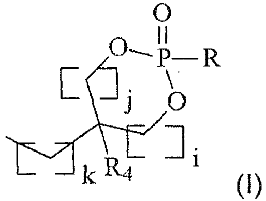
in which i, j, k, R and R₄ are as described above,
- R₁ is 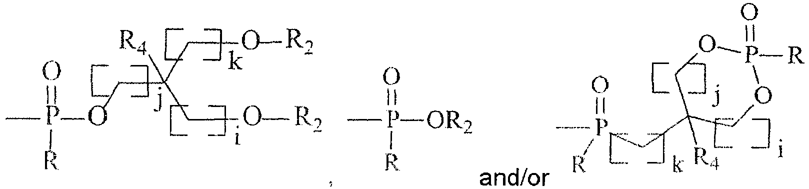
in which R₂, R₄, R, i, j and k are as described above; 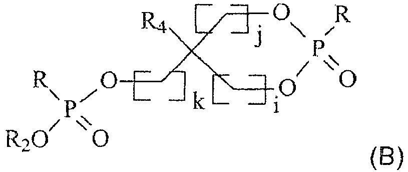 in which R₂, R₄, R, i, j and k are as described above; 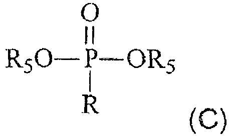 in which:
- R is a linear, branched or cyclic alkyl or alkenyl group as described above,
- R₅ is a linear, branched or cyclic alkyl or alkenyl group, **characterized in that** the said process comprises the following steps:
a) reacting a triol of general formula (IV) with a dialkyl phosphite of general formula (V) to give the intermediate (VI): 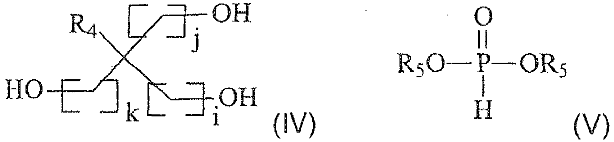
b) reacting the intermediate (VI) with a linear, branched or cyclic alkene or alkyne or a substituted alkene or alkyne bearing at least one unsaturated bond, in the presence of a non-oxidizing radical initiator, to partially convert the phosphite into phosphonate,
c) removal of bicyclic phosphite produced in the preceding step, via distillation, especially in the presence of a solvent,
d) reaction of the intermediate with a linear, branched or cyclic alkene or alkyne or a substituted alkene or alkyne bearing at least one unsaturated bond, in the presence of a radical initiator, to obtain total conversion of the intermediate, and
e) optional purification of the product obtained in step d), for example by distillation.

2. Process according to Claim 1, in which R is a proton.

3. Process according to Claim 1 or 2, in which the ratios between (A), (B) and (C) are:
| **Component** | **%** |
|---|---|
| (A) | 30-55 |
| (B) | 30-40 |
| (C) | 5-15 |

4. Process according to Claim 1, in which:
i, j, k = 1
R₄ = ethyl
R = hexyl
R₅ = butyl
R₂ = butyl or (I).

5. Process according to Claim 1, in which:
i, j, k = 1
R₄ = ethyl
R = butyl
R₅ = butyl
R₂ = butyl or (I).

6. Process according to Claim 3, in which:
i, j, k = 1
R₄ = ethyl
R = hexyl
R₅ = butyl
R₂ = butyl or (I)
and the mole ratios between (A), (B) and (C) are
| **Component** | **%** |
|---|---|
| (A) | 30-55 |
| (B) | 30-40 |
| (C) | 5-15 |

7. Process according to Claim 3, in which:
i, j, k = 1
R₄ = ethyl
R = butyl
R₅ = butyl
R₂ = butyl or (I)
and the mole ratios between (A), (B) and (C) are:
| **Component** | **%** |
|---|---|
| (A) | 30-55 |
| (B) | 30-40 |
| (C) | 5-15 |

8. Process according to Claim 1, in which the non-oxidizing free-radical initiator used in step b) is VAZO 67.

9. Process according to Claim 1, in which the initiator used in step d) is di-tert-butyl peroxide.

10. Process according to Claim 1, in which the triol used in step a) is TMOP.

11. Use of a phosphonate product prepared according to the process as defined in any one of Claims 1 to 10, as a flame retardant.

12. Use of a phosphonate product prepared according to the process as deifned in any one of Claims 1 to 11, absorbed onto an oxide, hydroxide or mineral salt of high porosity, as a flame retardant.

13. Use according to Claims 12 and 13 in thermoplastics.

14. Use according to Claims 11 and 12 in epoxy resins, polyurethane resins, phenolic resins, paints, varnishes or textiles.
